# EUROPÄISCHE PATENTSCHRIFT

(11) **EP 4 312 493 B1**
(45) Veröffentlichungstag und Bekanntmachung des Hinweises auf die Patenterteilung: **08.07.2026**
(21) Anmeldenummer: 22718096.5
(22) Anmeldetag: 22.03.2022
(51) Int. Cl.: A01C 9/00, A01C 15/00, A01C 7/06

(54) **LEGEMASCHINE FÜR HACKFRÜCHTE**
PLANTER FOR ROOT CROPS
PLANTEUSE POUR PLANTES SARCLÉES

(30) Priorität: 22.03.2021 DE 202021101465 U
(43) Veröffentlichungstag der Anmeldung: 07.02.2024
(73) Patentinhaber: Grimme Landmaschinenfabrik SE & Co. KG, 49104 Damme (DE)
(72) Erfinder: RECHTIEN, Jochen, 49088 Osnabrück (DE); HOHNHORST, Johannes, 49401 Damme (DE)
(74) Vertreter: Wischmeyer, André
(86) Internationale Anmeldenummer: PCT/EP2022/057528
(87) Internationale Veröffentlichungsnummer: WO 2022/200371

(56) Entgegenhaltungen:
- EP-A1- 3 108 735
- GB-A- 550 979
- US-A1- 2015 101 517

## Beschreibung

Die vorliegende Erfindung betrifft eine Legemaschine für Hackfrüchte, vorzugsweise für Kartoffeln, mit einem Rahmen, der zwischen einem vorderen Kupplungselement und einer hinteren, insbesondere durch ein oder mehrere Räder ausgebildeten Bodenabstützung verläuft, mit wenigstens einem Vorratsbehälter für Düngemittel, mit wenigstens einer Legevorrichtung und mit wenigstens einem Bunker für das zu legende Saatgut.

Legemaschinen nach dem Oberbegriff des Anspruchs 1 wurden in den vergangenen Jahren mit immer mehr Technik ausgestattet. Daher wurde die Wartung dieser Legemaschinen zunehmend aufwendiger. Für die Durchführung der Wartung ist somit zunehmend mehr Zeit einzuplanen, insbesondere um schwer zugängliche Teile korrekt überprüfen zu können.

GB 550 979 A offenbart eine Legemaschine für Hackfrüchte mit einem Rahmen, der zwischen einem vorderen Kupplungselement und einer hinteren Bodenabstützung verläuft, und mit einem Vorratsbehälter für Düngemittel und einer Legevorrichtung, die in Fahrtrichtung hintereinander angeordnet sind. Ebenfalls sind zwischen Legevorrichtung und Vorratsbehälter ein oder mehrere Sitze angeordnet.

In der EP 3 108 735 A1 ist ein Verfahren zur Düngerausbringung im Kartoffelanbau sowie eine Vorrichtung hierfür offenbart. Bei der in Längsrichtung kompakt bauenden Becherlegemaschine ist die Legevorrichtung direkt zwischen Düngemittelbehälter und Kartoffelbunker angeordnet.

US 2015/0101517 A1 offenbart ebenfalls eine Legevorrichtung, bei der der Vorratsbehälter und die Legevorrichtung schwenkbar am Rahmen angeordnet sind.

Es ist Aufgabe der vorliegenden Erfindung, die Wartung einer gattungsgemäßen Legemaschine, die insbesondere für das Legen von vier, sechs oder noch mehr Reihen Kartoffelsaatgut vorgesehen ist, zu verbessern.

Die Aufgabe wird gelöst durch einen Gegenstand gemäß Anspruch 1. Vorteilhafte Ausgestaltungen der Erfindung sind den auf diesen Anspruch rückbezogenen Unteransprüchen sowie der nachfolgenden Beschreibung zu entnehmen.

Eine erfindungsgemäße Legemaschine weist einen Rahmen auf, der zwischen Vorratsbehälter und Legevorrichtung und/oder zwischen Bunker und Legevorrichtung wenigstens einen von einer Seite der Legemaschine her zugänglichen und betretbaren Wartungsbereich in Form zumindest eines sich vom Untergrund aus erstreckenden Freiraums ausbildet. Zugänglich ist der Wartungsbereich dann, wenn er eine vom horizontalen Boden her freie Zugangshöhe von zumindest 90 cm aufweist. Beispielsweise wäre ein Kriechgang, in den das Wartungspersonal hineinkriechen kann, bei einer Höhe von zumindest 90 cm zugänglich. Betretbar ist der Wartungsbereich dann, wenn er einen vom Boden her freien Zugang ausbildet, der eine Mindesthöhe von 1,50 m, vorzugsweise von mindestens 1,70 m aufweist. Der Wartungsbereich kann nach oben hin offen ausgebildet sein und er ist insbesondere bis maximal 3 m hoch. Betretbar bedeutet insbesondere, dass eine Wartungsperson von der Seite her, ohne über etwaige Rahmenteile hinübersteigen zu müssen, in den Bereich hineintreten kann und sich somit in Längsrichtung der Legemaschine betrachtet innerhalb der linken und rechten Seite der Maschine befindet. Vorzugsweise ist der wenigstens eine Wartungsbereich zwischen einerseits dem Vorratsbehälter für Dünger mit der zugehörigen Streuvorrichtung und andererseits der oder den Legevorrichtungen ausgebildet.

Die Ausbildung des Wartungsbereichs geht vorzugsweise einher mit der Überführung der Maschine in eine Wartungsstellung, in der zumindest Teile des Rahmens angehoben sind. In dieser Wartungsstellung ist der den Wartungsbereich ausbildende Rahmen für die Schaffung des Freiraums entsprechend hoch ausgebildet. Beispielsweise kann der Rahmen hierfür teilweise angehoben werden, indem gegeneinander bewegliche Teile der Legemaschine, insbesondere des Rahmens, über wenigstens ein Stellmittel verstärkt vom Boden abgehoben werden, beispielsweise durch Änderung der Fahrwerkstellung oder einer anderen Bodenabstützung oder durch Änderung eines Längsverlaufs des Rahmens mittels einer Höhenverstellung des zu einem Kupplungselement verlaufenden Rahmenteils. Obgleich die Ausbildung des Wartungsbereichs durch die Legemaschine alleine bevorzugt wird, kann je nach Ausführungsform der Erfindung der Wartungsbereich ebenfalls alternativ oder ergänzend durch das Ausheben der Legemaschine durch einen Schlepper ausbilden. Bevorzugt erfolgt legemaschinenseitig eine solche Höhenverstellung durch eine Kombination einer Änderung der Bodenabstützung und einer Höhenverstellung des das Kupplungselement zum Schlepper aufweisenden Rahmenteils.

Der Rahmen begrenzt beispielsweise den Freiraum nach oben und/oder auf einer Seite. Der Rahmen ist zumindest für die Wartungsstellung verlängert. Er kann hierfür teleskopierbar, insbesondere mit ineinander verschiebbaren Rahmenteilen ausgebildet sein. Alternativ oder ergänzend ist der Rahmen zwecks Schaffung des Freiraums gegenüber dem Stand der Technik um den Bereich verlängert, so dass beispielsweise der Übergang vom den Vorratsbehälter tragenden Rahmen zum die Legevorrichtungen tragenden Rahmenteil verlängert ist. Die Nachteile hinsichtlich der geringeren Kompaktheit werden für die Wartungsverbesserung in Kauf genommen.

Vorzugsweise bilden ein oder mehrere Rahmenteile einen nach unten zum Untergrund hin offenen Durchlass aus, durch den das Wartungspersonal den Freiraum betreten kann. Insbesondere können an einem Rahmenteil funktionale Elemente der Legemaschine befestigt sein. Das oder die den Durchlass ausbildenden Rahmenteile sind insbesondere auf einer Seite der Maschine angeordnet und begrenzen vom Wartungsbereich aus betrachtet den Freiraum nach unten und/oder nach außen hin.

Als Rahmenteil wird allgemein ein Teil verstanden, der als tragender oder stützender Teil der Legemaschine, insbesondere deren Unterbaus, ausgebildet ist.

Der Rahmen kann bei mehrsträngig ausgebildeten Rahmen beispielsweise den Freiraum auf einer in Fahrtrichtung betrachtet linken Seite und auf einer in Fahrtrichtung betrachtet rechten Seite seitlich begrenzen. Bei einem zusätzlichen zentralen Rahmenlängsträger ergeben sich dann ein geteilter Wartungsbereich bzw. zwei separate Wartungsbereiche, die zentral jeweils von dem Rahmenlängsträger begrenzt sind.

Ein den Durchlass ausbildender Rahmenteil kann den Wartungsbereich auch seitlich begrenzen dergestalt, als dass sich ein Wartungsbereich nach dem Zutritt in diesen nach oben hin zumindest neben dem den Rahmenteil ausbildenden Durchlass weiter erstreckt.

Zwecks verbesserter Ausbildung des Durchlasses ist es gemäß einer weiteren vorteilhaften Ausgestaltung der Erfindung vorgesehen, dass die Legemaschine eine Hebevorrichtung aufweist, durch die ein den Durchlass aufweisender Teil der Legemaschine anhebbar ist. Dieses kann der Überführung der Legemaschine in die Wartungsstellung entsprechen oder zumindest ein Teil davon sein. Es wird der Abstand des den Durchlass nach oben begrenzenden Rahmenteils zum Boden vergrößert und der Wartungsbereich ist durch den Durchlass vereinfacht zugänglich. Beispielsweise umfasst die Hebevorrichtung eines oder mehrere der vorbeschriebenen Stellmittel zur Anhebung des Rahmens.

Vorteilhafterweise wird ein Absinken des in einem angehobenen Zustand befindlichen Durchlasses dadurch verhindert, dass die Hebevorrichtung ein sperrbares Stellelement aufweist. Vor einem Betreten des Wartungsbereiches kann dieses Stellelement betätigt werden, so dass das Betreten eines während eines Legevorgangs ansonsten verkleinerten Freiraums sicher möglich ist. Beispielsweise kann hierfür eine Hydraulikleitung eines ausgefahrenen Zylinders durch Betätigen eines Ventils gesperrt werden.

Der zumindest eine den Durchlass ausbildende Rahmenteil ist insbesondere dergestalt ausgebildet, dass er in oder gegen die Fahrtrichtung betrachtet in der den Wartungsbereich ausbildenden Position des Rahmens bzw. der Legemaschine zunächst ansteigt und dann wieder abfällt (bezogen auf den Abstand zum Untergrund), beispielsweise durch eine n-förmige oder spitzdachförmige Ausbildung, in der der Rahmenteil ein auf dem Kopf stehendes "v" darstellt. Es versteht sich, dass es bei dieser Betrachtung auf eine seitliche Betrachtung der Legemaschine ankommt. Zur Ausbildung des Durchlasses in der Wartungsstellung bildet der Rahmenteil bzw. die Rahmenteile daher eine Art oberer Türbalken, unter dem das Wartungspersonal in den Wartungsbereich eintreten kann.

Vorzugsweise begrenzt der Rahmen und begrenzen insbesondere die ein oder mehreren Rahmenteile den wenigstens einen Freiraum seitlich, so dass die entsprechenden Rahmenteile nicht oder nicht vollständig oberhalb des Wartungsbereichs angeordnet sind. Nach dem Durchgang durch den Durchlass, bei dem beispielsweise je nach Größe des Wartungspersonals der Kopf zu senken ist, erstreckt sich der Wartungsbereich dann weiter nach oben und ist seitlich vom Rahmen begrenzt. Insbesondere in Kombination mit einem zentralen Rahmenlängsträger und einem linken und einem rechten Rahmenteil ist eine trotz des Wartungsbereichs sehr stabil aufbauende Legemaschine ausgebildet. Die seitlichen Rahmenteile, die den Freiraum und Wartungsbereich begrenzen sind insbesondere als Blechelemente ausgebildet, vorzugsweise als Grobblechelemente mit einer Dicke > 3 mm.

Neben einer seitlichen Begrenzung des Freiraums bzw. des Wartungsbereiches kann der Rahmen gemäß einer weiteren vorteilhaften Ausgestaltung den wenigstens einen Freiraum in Fahrtrichtung vorn und/oder hinten begrenzen, was den Bereich insgesamt sicherer ausgestaltbar werden lässt. Insbesondere wird die Anordnung von etwaigen Bedienstellen am Rahmen entlang des Wartungsbereiches vereinfacht und die Wartung entsprechend erleichtert.

Vorzugsweise ist der Freiraum zur Aufnahme eines Quaders mit einer Breite von mindestens 50 cm, einer Länge in Fahrtrichtung von mindestens 30 cm und einer Höhe von zumindest 90 cm, bevorzugt von 1,30 m und noch bevorzugter 1,70 m ausgebildet, d.h. der Freiraum, in dem sich das Wartungspersonal bewegen kann, besitzt mindestens die Abmessungen eines solchen Quaders. Vorzugsweise beträgt die Länge desselben jedoch mindestens 40 cm und die Breite zumindest 60 cm. Vorzugsweise beträgt die Länge in Zug- bzw. Fahrtrichtung betrachtet maximal 80 cm bei einer maximalen Breite von 3 m, jeweils für eine vierreihige Legemaschine.

Je nach Ausbildung des Wartungsbereiches kann die Legemaschine vorzugsweise zwei in Fahrtrichtung betrachtet neben einander liegende Freiräume aufweisen, die jeweils seitlich eines zentralen Rahmenlängsträgers ausgebildet sind und gemeinsam einen geteilten Wartungsbereich oder auch zwei nebeneinander liegende Wartungsbereiche ausbilden. Alternativ kann ein Wartungsbereich auf einer Seite eines zentralen Rahmenlängsträgers längsversetzt zu einem weiteren Wartungsbereich auf derselben oder der anderen Seite des Rahmenlängsträgers ausgebildet sein. In diesem Fall wären dann zwei Wartungsbereiche vorhanden. Die Maschine ist bei bezügliche einer zentralen, in (Haupt-)Fahrtrichtung verlaufenden Längsachse nebeneinander liegenden Wartungsbereichen von beiden Seiten zugänglich, so dass insbesondere bei vier- und mehrreihigen Legemaschinen eine einerseits stabile Rahmenkonstruktion und andererseits zwei Wartungsbereiche, die von jeweils einer Seite aus zugänglich sind, geschaffen werden. Vorzugsweise weisen die Wartungsbereiche jeweils eine Breite von zumindest 1,20 m bis 1,80 m auf.

Etwaige Versorgungsleitungen für Strom, Hydraulik und/oder Pneumatik verlaufen in der Wartungsstellung vorzugsweise nicht durch die Wartungsbereiche sondern sind an den längsverlaufenden Rahmenteilen befestigt oder von diesen umschlossen.

Insbesondere werden der oder die Wartungsbereiche vorzugsweise zwischen einem Vorratsbehälter für Dünger (und damit auch einer Düngerstreuvorrichtung) und einer Legevorrichtung ausgebildet, womit dann bei vorzugsweise mehr als zwei Reihen Saatgut legenden Legemaschinen eine optimale Zugänglichkeit zu den einzelnen Bedienelementen der Düngerstreuvorrichtung und der Legevorrichtung gegeben ist.

Ergänzt werden kann die Legemaschine gemäß einem weiteren vorzugsweisen Ausführungsbeispiel mittels eines ebenfalls von wenigstens einer Seite der Legemaschine her betretbaren Laufstegs, der zwischen Vorratsbehälter und Legevorrichtung und/oder zwischen Bunker und Legevorrichtung und/oder zwischen Vorratsbehälter und Bunker angeordnet ist. Insbesondere ist der Laufsteg zwischen der Legevorrichtung und dem Bunker angeordnet, so dass die drei Bereiche Legevorrichtung, Bunker und Vorratsbehälter für Düngemittel in einer Draufsicht betrachtet jeweils durch einen Wartungsbereich/Laufsteg voneinander getrennt gewartet werden können.

Der Laufsteg ist vorzugsweise am Rahmen schwenkbar gelagert und insbesondere weiterhin alternativ oder ergänzend relativ zum Bunker schwenkbar am Bunker gelagert. Bei einer Bewegung des Bunkers im Rahmen eines Legebetriebs kann der Laufsteg aus dem Bewegungsbereich des Bunkers herausgeschwenkt werden bzw. gemeinsam mit diesem verschwenken und hierbei seine Lage hin zu einer weniger Bauraum benötigenden Lage verändern. Ebenfalls kann der Laufsteg bei einer Überführung des Rahmens in eine Wartungsstellung, in der der Wartungsbereich durch den Freiraum in Form beispielsweise von zwei jeweils von einer Seite aus her betretbaren Fluren bzw. Wartungsfluren ausgebildet wird, aus einer Nichtgebrauchsstellung in eine passenden Laufsteg-Wartungsposition verschwenken.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer perspektivischen Darstellung,
- Fig. 2: den Gegenstand nach Fig. 1 in einer Betriebs- und Wartungsstellung,
- Fig. 3: den Gegenstand nach Fig. 2 in einer Unteransicht.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

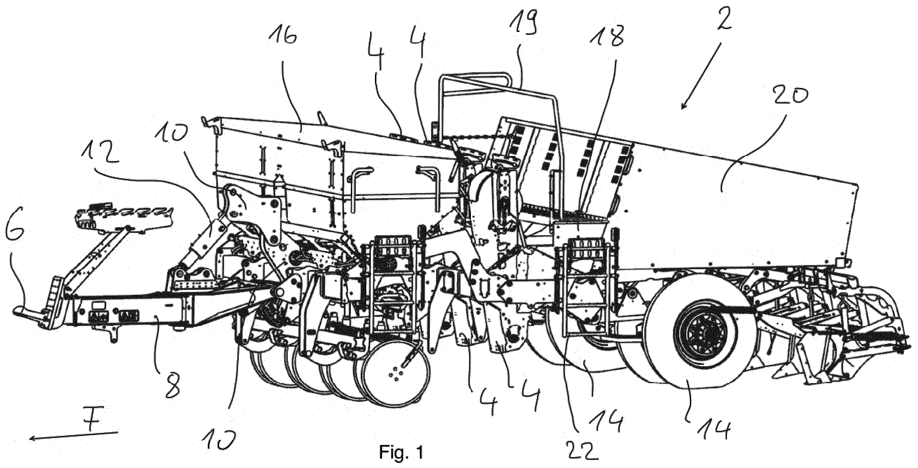

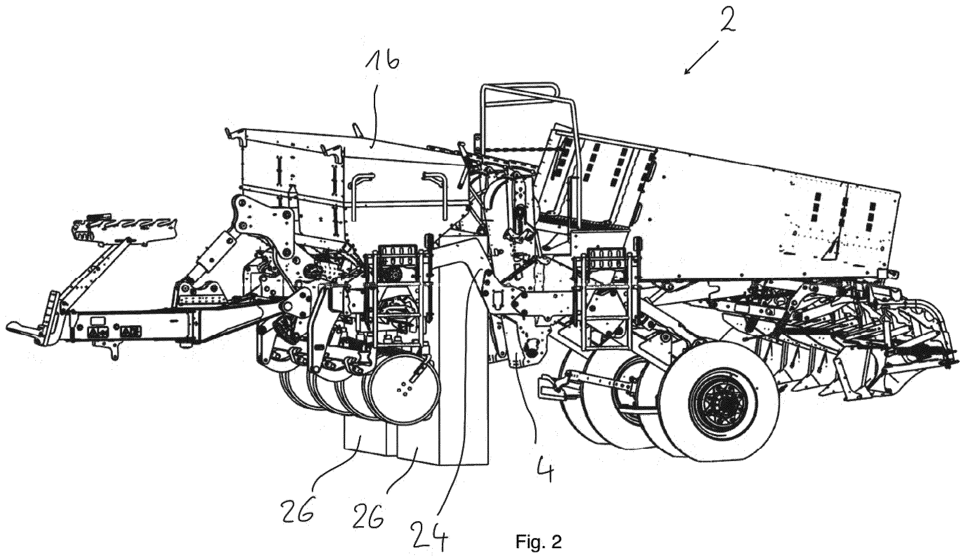

Eine erfindungsgemäße Legemaschine 2 ist vorliegend als gezogene Legemaschine für Hackfrüchte in Form von Kartoffeln in einer vierreihigen Variante ausgebildet, d.h. es können mittels Legevorrichtungen 4 vier Reihen von Kartoffelknollen nebeneinander und beabstandet im Boden abgelegt werden. Die Legemaschine 2 weist einen mehrteiligen Rahmen auf. Der Rahmen umfasst einen ein Kupplungselement 6 zur Anbindung an einen Schlepper aufweisenden vorderen Längsträger 8, der mit weiteren Längsträgerteilen 10 und einem Stellmittel 12 zur Höhenverstellung des vorderen Rahmens ausgebildet ist. Weiterhin weist der Rahmen mehrere Räder 14 eines Fahrwerks zur Ausbildung einer Bodenabstützung auf, die über weitere Rahmenteile mit dem vorderen Längsträger 8 und dem dortigen vorderen Kupplungselement 6 verbunden ist. Das Fahrwerk kann aus der in Fig. 1 dargestellten Position in die in Fig. 2 dargestellte Position verbracht werden, in der der Rahmen angehoben ist.

Diese Position stellt die Wartungsstellung dar, in der der Wartungsbereich ausgebildet ist. Alternativ oder ergänzend kann der vordere Rahmenteil 8 mittels des Stellmittels 12, welches ausfährt und auf das Kupplungselement des Schleppers heruntergedrückt wird, als Teil einer Höhenverstellung zur Ausbildung des Wartungsbereiches den Rahmen teilweise anheben.

In der vorderen Hälfte der Legemaschine 2 bezogen auf eine Fahrtrichtung F befindet sich ein Vorratsbehälter 16 für Düngemittel, der in Fahrtrichtung F betrachtet im Wesentlichen über die gesamte Breite der Legemaschine 2 angeordnet ist. Hinter den Legevorrichtungen 4 befindet sich ein Laufsteg 18 mit einem Geländer 19. Der Laufsteg 18 ist unmittelbar an einer Wand eines ebenfalls über die gesamte Maschinenbreite verlaufenden Bunkers 20 angeordnet. Der Laufsteg 18 ermöglicht eine Wartung der Legevorrichtungen 4, da er ebenfalls quer über rund 80% der Maschinenbreite verläuft und über eine Leiter 22 von der Seite her zugänglich ist.

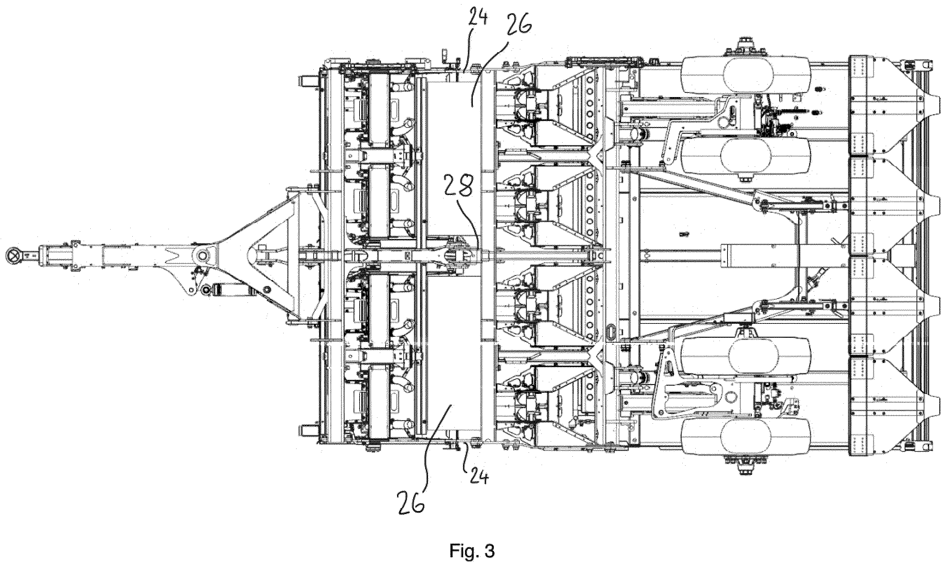

Zur Ausbildung eines Wartungsbereiches zwischen Vorratsbehälter 16 und den Legevorrichtungen 4 in der in der Fig. 2 beschriebenen Position verlaufen sowohl auf der linken als auch auf der rechten Seite der Legemaschine angeordnete Rahmenteile 24 in Form von Blechen zunächst hoch und wieder runter, so dass eine verbesserte Kopffreiheit für den Zutritt zu den innenseitig der seitlichen Rahmenteile 24 ausgebildeten, zwei Wartungsbereichen gegeben ist. Die Größe des zweiteiligen Wartungsbereichs, in dem sich das Wartungspersonal bewegen kann, entspricht von den Abmessungen her den durch Quader dargestellten Freiräumen 26. Die Wartungsbereiche erstrecken sich zwischen den seitlichen Rahmenteilen 24 und einem zentralen Rahmenlängsträger 28 (vergl. Fig. 3).

Entgegen der herkömmlichen Auffassung, Legemaschinen immer kompakter zu bauen, ist durch die Verlängerung der Maschine und die Schaffung des Freiraums zwischen Vorratsbehälter 16 (samt zugehöriger Streuvorrichtung) und Legevorrichtung 4 die Wartungsfreundlichkeit der Vorrichtung verbessert, was zwar zu Lasten der Wendigkeit der Vorrichtung geht, allerdings durch die Vorteile einer sicheren und einfach durchführbaren Wartung wettgemacht wird.

## Patentansprüche

1. Legemaschine für Hackfrüchte, vorzugsweise für Kartoffeln, mit einem Rahmen, der zwischen einem vorderen Kupplungselement (6) und einer hinteren insbesondere durch ein oder mehrere Räder (14) ausgebildeten Bodenabstützung verläuft,
mit wenigstens einem Vorratsbehälter (16) für Düngemittel,
mit wenigstens einer Legevorrichtung (4) und
mit wenigstens einem Bunker (20) für das zu legende Saatgut,
**dadurch gekennzeichnet, dass**
der Rahmen zwischen Vorratsbehälter (16) und Legevorrichtung (4) und/oder zwischen Bunker (20) und Legevorrichtung (4) wenigstens einen von einer Seite der Legemaschine (2) her zugänglichen und betretbaren Wartungsbereich in Form zumindest eines sich vom Untergrund aus erstreckenden Freiraums (26) ausbildet.

2. Legemaschine nach Anspruch 1, **dadurch gekennzeichnet, dass** der Rahmen zur Überführung der Legemaschine (2) in eine Wartungsstellung zumindest teilweise anhebbar ausgebildet ist.

3. Legemaschine nach Anspruch 1 oder 2, **dadurch gekennzeichnet, dass** zumindest ein Rahmenteil (24) einen nach unten zum Untergrund hin offenen Durchlass ausbilden.

4. Legemaschine nach Anspruch 3, **dadurch gekennzeichnet, dass** eine Hebevorrichtung ein sperrbares Stellelement aufweist, durch welches ein Absinken des in einem angehobenen Zustand befindlichen Durchlasses verhindert wird.

5. Legemaschine nach einem der Ansprüche 3 oder 4, **dadurch gekennzeichnet, dass** der zumindest eine den Durchlass ausbildende Rahmenteil (24) in oder gegen die Fahrtrichtung (F) ansteigt und wieder abfällt.

6. Legemaschine nach einem der vorherigen Ansprüche, **dadurch gekennzeichnet, dass** der Rahmen den wenigstens einen Wartungsbereich seitlich begrenzt.

7. Legemaschine nach einem der vorherigen Ansprüche, **dadurch gekennzeichnet, dass** der Rahmen den wenigstens einen Freiraum (26) in Fahrtrichtung vorne und/oder hinten begrenzt.

8. Legemaschine nach einem der vorherigen Ansprüche, **dadurch gekennzeichnet, dass** der Freiraum (26) zur Aufnahme eines Quaders mit einer Breite von mindestens 50 cm, einer Länge in Fahrtrichtung von mindestens 30 cm und einer Höhe von zumindest 90 cm, bevorzugt zumindest 170cm, ausgebildet ist.

9. Legemaschine nach einem der vorherigen Ansprüche, **dadurch gekennzeichnet, dass** die Legemaschine (2) zwei in Fahrtrichtung (F) betrachtet nebeneinanderliegende Freiräume (26) aufweist, die jeweils seitlich eines zentralen Rahmenlängsträgers (28) ausgebildet sind.

10. Legemaschine nach einem der vorherigen Ansprüche, **dadurch gekennzeichnet, dass** die Legemaschine (2) zwischen Vorratsbehälter (16) und Legevorrichtung (4) und/oder zwischen Bunker (20) und Legevorrichtung (4) und/oder zwischen Vorratsbehälter (16) und Bunker (20) wenigstens einen von einer Seite der Legemaschine (4) her betretbaren Laufsteg (18) aufweist.

11. Legemaschine nach Anspruch 10, **dadurch gekennzeichnet, dass** der Laufsteg (18) an dem Rahmen schwenkbar gelagert ist.

12. Legemaschine nach einem der vorherigen Ansprüche 10 oder 11, **dadurch gekennzeichnet, dass** der Laufsteg (18) relativ zum Bunker (20) schwenkbar am Bunker (20) gelagert ist.

## Claims

1. Planting machine for root crops, preferably for potatoes, with a frame which extends between a front coupling element (6) and a rear ground support formed in particular by one or more wheels (14),
with at least one storage container (16) for fertilizer,
with at least one planting device (4) and
with at least one hopper (20) for the seeding material to be planted,
**characterized in that**
the frame between the storage container (16) and the planting device (4) and/or between the hopper (20) and the planting device (4) forms at least one maintenance area which is accessible and can be entered from one side of the planting machine (2) in the form of at least one free space (26) extending from the ground.

2. The planting machine according to claim 1, **characterized in that** the frame for transferring the planting machine (2) into a maintenance position is designed to be at least partially liftable.

3. The planting machine according to claim 1 or 2, **characterized in that** at least one frame part (24) forms a passage which is open downwards toward the ground.

4. The planting machine according to claim 3, **characterized in that** a lifting device has a lockable actuating element by which a lowering of the passage in a raised state is prevented.

5. The planting machine according to one of claims 3 or 4, **characterized in that** the at least one frame part (24) forming the passage rises in or against the direction of travel (F) and falls again.

6. The planting machine according to one of the preceding claims, **characterized in that** the frame laterally bounds the at least one maintenance area.

7. The planting machine according to one of the preceding claims, **characterized in that** the frame bounds the at least one free space (26) at the front and/or rear in the direction of travel.

8. The planting machine according to one of the preceding claims, **characterized in that** the free space (26) for receiving a cuboid is designed with a width of at least 50 cm, a length in the direction of travel of at least 30 cm and a height of at least 90 cm, preferably at least 170 cm.

9. The planting machine according to one of the preceding claims, **characterized in that** the planting machine (2) has two free spaces (26) which are adjacent to one another as viewed in the direction of travel (F) and which free spaces (26) are each formed laterally of a central longitudinal frame member (28).

10. The planting machine according to one of the preceding claims, **characterized in that** the planting machine (2) has at least one walkway (18) between the storage container (16) and the planting device (4) and/or between the hopper (20) and the planting device (4) and/or between the storage container (16) and the hopper (20), which walkway (18) can be entered from one side of the planting machine (4).

11. The planting machine according to claim 10, **characterized in that** the walkway (18) is pivotably mounted on the frame.

12. The planting machine according to one of the preceding claims 10 or 11, **characterized in that** the walkway (18) is pivotably mounted on the hopper (20) relative to the hopper (20).

## Revendications

1. Planteuse pour plantes sarclées, de préférence pour des pommes de terre, avec un châssis, qui s'étend entre un élément d'attelage avant (6) et un élément d'appui au sol arrière formé en particulier par une ou plusieurs roues (14),
avec au moins un réservoir de stockage (16) pour engrais,
avec au moins un dispositif de plantation (4) et
avec au moins une trémie (20) pour les semences à planter, **caractérisée en ce que**
le châssis formant entre le réservoir de stockage (16) et le dispositif de plantation (4) et/ou entre la trémie (20) et le dispositif de plantation (4) au moins une zone d'entretien accessible et praticable depuis un côté de la planteuse (2) sous la forme d'au moins un espace libre (26) s'étendant à partir du plancher.

2. Planteuse selon la revendication 1, **caractérisée en ce que** le châssis est formé de manière à pouvoir être relevé au moins en partie pour le transfert de la planteuse (2) dans une position d'entretien.

3. Planteuse selon la revendication 1 ou 2, **caractérisée en ce qu'**au moins une partie de châssis (24) forme un passage ouvert vers le bas en direction du plancher.

4. Planteuse selon la revendication 3, **caractérisée en ce qu'**un dispositif de levage comporte un élément de réglage verrouillable, qui permet d'empêcher un abaissement du passage se trouvant dans un état relevé.

5. Planteuse selon l'une des revendications 3 ou 4, **caractérisée en ce que** l'au moins une partie de châssis (24) formant le passage monte et redescend dans le sens de la marche (F) ou dans le sens opposé.

6. Planteuse selon l'une des revendications précédentes, **caractérisée en ce que** le châssis délimite latéralement l'au moins une zone d'entretien.

7. Planteuse selon l'une des revendications précédentes, **caractérisée en ce que** le châssis délimite l'au moins un espace libre (26) à l'avant et/ou à l'arrière dans le sens de la marche.

8. Planteuse selon l'une des revendications précédentes, **caractérisée en ce que** l'espace libre (26) est formé pour recevoir un parallélépipède avec une largeur d'au moins 50 cm, une longueur dans le sens de la marche d'au moins 30 cm et une hauteur d'au moins 90 cm, de manière préférée d'au moins 170 cm.

9. Planteuse selon l'une des revendications précédentes, **caractérisée en ce que** la planteuse (2) comporte deux espaces libres (26) situés côte à côte dans le sens de la marche (F), qui sont formés chacun à côté d'un longeron central (28) de châssis.

10. Planteuse selon l'une des revendications précédentes, **caractérisée en ce que** la planteuse (2) comporte au moins une passerelle (18) praticable depuis un côté de la planteuse (4) entre le réservoir de stockage (16) et le dispositif de plantation (4) et/ou entre la trémie (20) et le dispositif de plantation (4) et/ou entre le réservoir de stockage (16) et la trémie (20).

11. Planteuse selon la revendication 10, **caractérisée en ce que** la passerelle (18) est montée de manière à pouvoir pivoter sur le châssis.

12. Planteuse selon l'une des revendications précédentes 10 ou 11, **caractérisée en ce que** la passerelle (18) est montée sur la trémie (20) de manière à pouvoir pivoter par rapport à la trémie (20).
